# EUROPEAN PATENT APPLICATION

(11) **EP 4 307 229 A1**
(43) Date of publication of application: **17.01.2024**
(21) Application number: 22185244.5
(22) Date of filing: 15.07.2022
(51) Int. Cl.: G06T 7/70, A61C 7/00

(54) **METHOD AND SYSTEM FOR TOOTH POSE ESTIMATION**

(71) Applicant: 3Shape A/S, 1060 Copenhagen K (DK)
(72) Inventor: ØRKILD, Thomas, 1060 Copenhagen K (DK)
(74) Representative: Guardian IP Consulting I/S

(57) **Abstract**

According to an embodiment a computer-implemented method for tooth pose estimation is disclosed. The method comprises obtaining a virtual 3D representation (100) representing a patient's dentition, segmenting the virtual 3D representation (100) to obtain at least a first segmented tooth representation (101) and a second segmented tooth representation (105), wherein the at least first and second segmented tooth representation (101, 105) represent neighboring teeth in the patient's dentition. Furthermore, the method comprises determining an initial tooth pose (302) for the first segmented tooth representation (101) using a geometric parameter of the first segmented tooth representation (101) and a geometric parameter of the second segmented tooth representation (105). A normalized tooth representation (301) of the first segmented tooth representation (101) is obtained by transforming the first segmented tooth representation (101) using the initial tooth pose (302) for the first segmented tooth representation (101). The normalized tooth representation (301) of the first segmented tooth representation (101) is then input into a trained neural network (400). An output from the trained neural network (400) is produced, comprising a correct tooth pose for the first segmented tooth representation (101).

## Description

### Technical field

The disclosure relates to a computer-implemented method and system for tooth pose estimation in a virtual 3D representation of a patient's dentition.

### Background

Development of intraoral scanning techniques has been instrumental in the transition to modern digital dentistry. Use of an intraoral 3D scanner allows a dental professional to accurately and quickly capture intraoral situation of a patient which may then be visualized on a display as a virtual 3D model or a virtual 3D representation. Obtained virtual 3D representation of patient's teeth may thus serve as a digital impression, offering numerous advantages over a classical physical impression. Overall efficiency of dental procedures is thereby improved as, for example, the created digital impressions can be used in a range of applications such as design of dental restorations or design of orthodontic treatments. The virtual 3D representation may, in addition, be used for diagnostic purposes to visualize to the user, for example a dentist, presence of a dental condition such as caries, plaque, gingivitis or tooth wear.

When using virtual 3D representations in any of the abovementioned applications, accuracy may be of importance. Therefore, tooth poses need to be correctly determined for each individual tooth representation within the virtual 3D representation of patient's set of teeth. A tooth pose may be understood as a local coordinate system for a tooth representation where the local coordinate system comprises a tooth specific origin and three mutually-orthogonal axes intersecting at the origin. Tooth poses may be set manually, a process which is labor- and time-intensive and involves manual annotation of coordinate system axes for each tooth representation. Other methods for determining tooth poses may include use of mathematical algorithms such as Principal Component Analysis (PCA), which may take multiple seconds to output tooth poses. The computational time required makes current methods less attractive for performance-sensitive applications where tooth pose estimation is desired in a limited timeframe, for example less than one second. Additionally, the method for tooth pose estimation using the Principal Component Analysis algorithm may be prone to errors if the patient's teeth are heavily grinded.

It is desired to provide an alternative method for tooth pose estimation that is capable of calculating tooth poses in an efficient manner, for example in lesser time than what current algorithms allow for.

### Summary

In an embodiment a computer-implemented method for tooth pose estimation is disclosed, where the method comprises:
- obtaining a virtual 3D representation representing a patient's dentition;
- segmenting the virtual 3D representation to obtain at least a first segmented tooth representation;
- inputting the at least first segmented tooth representation into a trained neural network;
- producing an output from the trained neural network, wherein the output comprises a correct tooth pose for the at least first segmented tooth representation.

Term "tooth pose" can be understood as a local coordinate system corresponding to a tooth representation. In the present disclosure terms "tooth pose" and "local coordinate system" have the same meaning and are used interchangeably. A tooth pose may thus comprise three mutually orthogonal axes intersecting at a tooth specific origin. The local coordinate system may be placed within the tooth representation. The tooth specific origin may be placed at a center point of the tooth representation. The center point may be a geometric parameter such as a centroid or center of mass of the tooth representation. The local coordinate system may be defined based on morphological properties of each tooth representation.

For example, a first axis of the tooth pose may lie along a mesial-distal direction of the tooth representation in a direction of a neighbor tooth representation. When teeth of a patient are viewed in dental quadrants, then the first axis of the tooth pose may point in a distal direction if the tooth pose is associated with a tooth on a left side of a maxillary (upper) arch or a tooth on a right side of a mandibular (lower) arch. The first axis of the tooth pose may point in a mesial direction if the tooth pose is associated with a tooth on a right side of the maxillary arch or a tooth on a left side of the mandibular arch.

For example, a second axis of the tooth pose may lie along a coronal direction of the tooth representation and may be orthogonal to an occlusal surface or bite surface of the tooth representation. The coronal direction can be understood as a direction from a tooth root to a tooth crown, in the direction of the tooth crown. A third axis of the tooth pose may be orthogonal to the first and second axis and may face outwards along vestibular or facial direction. The tooth pose defined in this manner may also be referred to as a correct tooth pose, a target tooth pose, or a correct local coordinate system.

The method according to an embodiment comprises obtaining the virtual 3D representation representing the patient's dentition. The virtual 3D representation of the patient's dentition may be constructed based on scan data collected in an intraoral scanning process in which an intraoral scanner is used to scan patient's intraoral situation comprising teeth and gingiva. In an alternative to the intraoral scanner, a so-called lab scanner can be used to scan a gypsum model of the patient's dentition. The captured scan data can be used to construct the virtual 3D representation which accurately represents the scanned teeth and gingiva. The virtual 3D representation can be stored in, and accessed from a memory device of a computer system. Usually, the virtual 3D representation can be displayed on a display screen in a form of a 3D mesh, for example a triangular mesh. Alternatively, the virtual 3D representation can be displayed on the display screen in form of a point cloud, a volumetric representation, or any other suitable 3D representation form. The virtual 3D representation representing the patient's dentition may be referred to as the virtual 3D representation.

Further, the method comprises segmenting the virtual 3D representation to obtain at least the first segmented tooth representation and a second segmented tooth representation. The at least first and second segmented tooth representation may include neighboring teeth in the patient's dentition. Segmentation process allows to identify distinct dental objects such as individual teeth and/or surrounding gingiva in the virtual 3D representation representing the patient's dentition having a plurality of teeth. Term dentition may comprise teeth arrangement and morphology in at least one of the upper and lower jaw. Therefore, the output of the segmentation process may include identification of individual tooth representations, usually in form of tooth meshes or tooth point clouds.

The at least first and second segmented tooth representation are preferably representations of neighboring teeth in the patient's dentition. This can be useful in the tooth pose estimation method because it may be possible to determine, or estimate, an initial tooth pose for the at least first segmented tooth representation based on a geometric parameter of the first segmented tooth representation and a geometric parameter of the second segmented tooth representation. The initial tooth pose is thereby simply calculated and may be a very good estimate of the correct tooth pose. Term "neighboring teeth" is to be understood as two teeth that are adjacently placed with respect to each other in the upper jaw or two teeth that are adjacently placed with respect to each other in the lower jaw. Most commonly, the neighboring teeth will have consecutive numeration in the Universal Numbering Notation or System (UNN) where numerals 1 - 32 are assigned to human teeth. In some cases, the neighboring teeth will not be marked with consecutive numbers in UNN notation, for example if a tooth in between the currently neighboring teeth has been removed previously.

According to the embodiment of the disclosure, the method further comprises determining the initial tooth pose for the first segmented tooth representation using the geometric parameter of the first segmented tooth representation and the geometric parameter of the second segmented tooth representation. In case where a trained neural network is used to accurately determine the tooth pose for the first segmented tooth representation, the step of determining the initial tooth pose for the first segmented tooth representation can be considered as a pre-processing step of creating an input to the trained neural network, which allows the trained neural network to produce a more accurate output, in a faster manner, as compared to the tooth pose estimation method where this pre-processing step is absent.

The geometric parameter of the first segmented tooth representation and the geometric parameter of the second segmented tooth representation may be, in one embodiment, a centroid of the first segmented tooth representation and a centroid of the second segmented tooth representation, respectively. A centroid of a segmented tooth representation is a point in 3D space that lies in a geometric center of the segmented tooth representation.

In an alternative embodiment, the geometric parameter of the first segmented tooth representation and the geometric parameter of the second segmented tooth representation may be a center of mass of the first segmented tooth representation and a center of mass of the second segmented tooth representation, respectively. A center of mass of the segmented tooth representation is a point in 3D space that lies in a gravitational center of the segmented tooth representation. In case the segmented tooth representation represents a molar and/or a premolar tooth, cusps located on the tooth top may cause the center of mass to be located closer towards the tooth representation top as compared to the centroid of that tooth representation. An advantage of using the centroid over the center of mass may be reflected in that the centroid is more robust towards different tooth morphology.

Alternatively, the geometric parameter of the first segmented tooth representation may be the center of mass of the first segmented tooth representation and the geometric parameter of the second segmented tooth representation may be the centroid of the second segmented tooth representation or the geometric parameter of the first segmented tooth representation may be the centroid of the first segmented tooth representation and the geometric parameter of the second segmented tooth representation may be the center of mass of the second segmented tooth representation. In yet another embodiment, the geometric parameter of the first or second segmented tooth representation may be a point on a longitudinal axis of the first or second segmented tooth representation, where the point may be at a distance from the occlusal surface of the first or second segmented tooth representation.

To determine the initial tooth pose for the first segmented tooth representation may comprise determining an initial local coordinate system for the first segmented tooth representation. That, in turn, means that an origin of the initial local coordinate system is determined and that three axes of the initial local coordinate system are determined. The origin of the initial local coordinate system for the first segmented tooth representation may lie in the geometric parameter of the first segmented tooth representation, for example in the centroid of the first segmented tooth representation. The centroid of the second segmented tooth representation representing a neighboring tooth to a tooth represented by the first segmented tooth representation, may be used to determine a first axis of the initial local coordinate system for the first segmented tooth representation. For example, it may be possible to calculate the difference between the geometric parameters (e.g. centroids) of the first and second segmented tooth representation to determine the first axis of the initial local coordinate system for the first segmented tooth representation. The first axis of the initial local coordinate system for the first segmented tooth representation would thus be directed towards the centroid of the second tooth representation. Instead of, or in addition to, the centroid of the first and second segmented tooth representation, another geometric parameter may be used to determine the first axis of the initial local coordinate system for the first segmented tooth representation, for example the center of mass of the first and second segmented tooth representation.

In case the teeth represented by the first and second segmented tooth representation are completely aligned with respect to each other, then the first axis of the initial tooth pose for the first segmented tooth representation would closely match a first axis of a correct tooth pose for the first segmented tooth representation. Teeth in the upper or the lower jaw are generally considered aligned if their placement follows an ideal dental arch line, which may be U-shaped. In case the teeth represented by the first and second segmented tooth representation are not aligned with respect to each other, then the first axis of the initial tooth pose for the first segmented tooth representation would not match the first axis of the correct tooth pose for the first segmented tooth representation. However, in this case the first axis of the initial tooth pose may be a good estimate of the first axis of the correct tooth pose.

Once the first axis of the initial tooth pose for the first segmented tooth representation is determined, it may be possible to determine a second and a third axis of that initial tooth pose. The second axis may, for example, be directed from the centroid of the first segmented tooth representation towards an occlusal surface of the first segmented tooth representation. The second axis of the initial tooth pose for the first segmented tooth representation may be calculated as a mean facet normal of all facets forming teeth representations in the virtual 3D representation. A facet normal is a vector pointing orthogonal to the given facet. Once the second axis of the initial tooth pose for the first segmented tooth representation is determined then the third axis of the initial tooth pose for the first segmented tooth representation may be found as a cross-product of the first and the second axis.

In an embodiment, the method further comprises obtaining a normalized tooth representation of the first segmented tooth representation by transforming the first segmented tooth representation using the initial tooth pose for the first segmented tooth representation. Transforming may comprise rotating the first segmented tooth representation according to the initial local coordinate system or the initial tooth pose for the first segmented tooth representation and translating the first segmented tooth representation according to a negative value of coordinates of the centroid of the first segmented tooth representation. The result of normalization is reflected in that the first segmented tooth representation is brought in a global coordinate system origin with coordinates (0, 0, 0) and in that the axes of the initial tooth pose for the first segmented tooth representation overlap corresponding axes of the global coordinate system.

Obtaining the normalized tooth representation of the first segmented tooth representation is useful in that the individual vertices of the first segmented tooth representation are all placed around the global coordinate system origin with coordinates (0, 0, 0). If the trained neural network processes coordinates of multiple segmented tooth representations, then all segmented tooth representations are placed around the global coordinate system origin, which makes operations performed by the trained neural network faster and overall performance of the trained neural network robust.

In an embodiment, the normalized tooth representation of the first segmented tooth representation serves as an input for the trained neural network. The input for the trained neural network may comprise an approximate of the tooth pose for the first segmented tooth representation while an output of the trained neural network provides the correct tooth pose for the first segmented tooth representation. The trained neural network may be a deep learning network capable of handling directly 3-dimensional (3D) point clouds. An example of such network architecture is a PointNet neural network invariant to order of points on the input, developed by Stanford University ("PointNet: Deep Learning on Point Sets for 3D Classification and Segmentation", Charles R. Qi, Hao Su, Kaichun Mo, Leonidas J. Guibas). Alternatively, PointNet++ or PointNet-like network architectures can be used for the purpose of tooth pose estimation. Alternatively, the trained neural network may process 2-dimensional data wherein the 2-dimensional data may be obtained by converting the 3-dimensional point clouds, e.g. by so-called mesh-flattening algorithms, to the 2-dimensional data.

After obtaining the correct tooth pose for the first segmented tooth representation, the segmented virtual 3D representation representing the patient's dentition may be displayed with the correct tooth pose for the first segmented tooth representation. The displaying may occur, for example on the display screen. Displaying may comprise, additionally or alternatively, displaying only the first segmented tooth representation with the correct tooth pose for the first segmented tooth representation.

In one embodiment the method may comprise displaying the first segmented tooth representation with one axis, for example the second axis of the tooth pose for the first segmented tooth representation, shown to a user. The second axis may lie along a coronal direction of the first segmented tooth representation and may be orthogonal to the occlusal surface or bite surface of the first segmented tooth representation. The second axis of the tooth pose for the first segmented tooth representation may be used in designing an orthodontic treatment. In particular, it may be used to determine how the tooth represented by the first segmented tooth representation may rotate in the jaw. This may be of particular advantage to the dental professional in predicting an outcome of orthodontic treatments.

In one embodiment the method may comprise using at least one of the axes such as the first axis of the tooth pose for the first segmented tooth representation and the first axis of the tooth pose for the second segmented tooth representation to quantify mutual alignment of two neighboring teeth. For example, the first axis of the tooth pose for the first segmented tooth representation, intersecting with the first segmented tooth representation, may determine a mesial and a distal point of the first segmented tooth representation. This may be of advantage to the dental professional in determining how the tooth represented by the first segmented tooth representation is aligned with respect to at least one of its neighboring teeth. Namely, if the tooth represented by the first segmented tooth representation is aligned with the at least one of its neighboring teeth, then the mesial point or distal point of the first segmented tooth representation is substantially close to a distal point or a mesial point, respectively, of a segmented tooth representation representing the at least one neighboring tooth.

In one embodiment the geometric parameter of the first segmented tooth representation may be the centroid of the first segmented tooth representation and the geometric parameter of the second segmented tooth representation may be the centroid be the second segmented tooth representation. A centroid represents a geometric center of a given volume. The centroid of the first segmented tooth representation thus lies in a geometric center of the first segmented tooth representation and the centroid of the second segmented tooth representation lies in a geometric center of the second segmented tooth representation.

The centroid of the first segmented tooth representation may be identified as a center of a bounding box placed around the first segmented tooth representation. The bounding box is a 3-dimensional box or a cuboid of minimum dimension encompassing the first segmented tooth representation. The centroid can be determined by identifying a first point of the bounding box with lowest values of x, y, z coordinates and a second point of the bounding box with highest values of x, y, z coordinates and calculating an average of the first point and the second point. In a similar manner, the centroid of the second segmented tooth representation may be identified.

In an embodiment according to the disclosure, determining the initial tooth pose for the first segmented tooth representation using the geometric parameter of the first and second segmented tooth representation may comprise determining the first, the second and the third axis of the initial tooth pose for the first segmented tooth representation. The first, second and third axis of the initial tooth pose are mutually orthogonal and are intersecting in the center point of the first segmented tooth representation. The center point may be the geometric parameter such as a centroid or a center of mass of the first segmented tooth representation.

The first axis of the initial tooth pose for the first segmented tooth representation may be directed towards the center point of the second segmented tooth representation which, in one embodiment, may be the centroid of the second segmented tooth representation. The second axis of the initial tooth pose for the first segmented tooth representation may lie along a coronal direction of the first segmented tooth representation and may be orthogonal to the occlusal surface or bite surface of the first segmented tooth representation. The coronal direction can be understood as a direction from a tooth root to a tooth crown, in the direction of the tooth crown. A third axis of the initial tooth pose for the first segmented tooth representation may be orthogonal to the first and second axis and may face outwards of the jaw along vestibular or facial direction.

The first axis of the initial tooth pose for the first segmented tooth representation can be calculated as a difference between the centroid of the first segmented tooth representation and the centroid of the second segmented tooth representation. In this way an approximation of the first axis of the correct tooth pose for the first segmented tooth representation can be found.

The first axis of the correct tooth pose for the first segmented tooth representation may lie along a mesial-distal direction of the first segmented tooth representation.

The second axis of the initial tooth pose for the first segmented tooth representation is orthogonal to the occlusal surface of the first segmented tooth representation. In general, an occlusal surface of a tooth or a tooth representation can be considered as the biting surface of that tooth, used for chewing or grinding. The second axis of the initial tooth pose for the first segmented tooth representation can be calculated as the mean facet normal of all facets forming teeth representations in the virtual 3D representation. A facet is a surface on a 3D mesh delimited by at least three points or vertices which are interconnected with straight lines or edges. In case of point cloud representation of the first segmented tooth representation, the second axis of the initial tooth pose for the first segmented tooth representation can be calculated as average vertex normal of all vertices forming teeth representations in the virtual 3D representation.

According to the method of an embodiment, the third axis of the initial tooth pose for the first segmented tooth representation may be obtained as a cross product between the first axis of the initial tooth pose for the first segmented tooth representation and the second axis of the initial tooth pose for the first segmented tooth representation. The third axis of the initial tooth pose for the first segmented tooth representation may be orthogonal to the first and second axis of the initial tooth pose for the first segmented tooth representation and may face outwards along vestibular or facial direction.

Method according to an embodiment may further comprise a step of adapting the first segmented tooth representation by reducing a plurality of vertices and/or facets representing the first segmented tooth representation. Reduction of the number of vertices may also be referred to as mesh decimation. One way the reduction of vertices may be performed is through a mesh-specific operation where edges having low curvature are collapsed such that no useful information is lost. For example, edge collapsing comprises removal of an edge by merging two vertices connected by the edge into a new vertex at a new location, for example in a center of the edge that has been collapsed. The step of mesh decimation is advantageous as it contributes to faster overall tooth pose estimation because the trained neural network processes less input information.

In an embodiment where the first segmented tooth representation is represented by a point cloud, adapting the first segmented tooth representation may be achieved by reducing the number of points in the point cloud. A new point cloud may be built, in an iterative manner, by adding points from the point cloud representing the first segmented tooth representation to the new point cloud if a predetermined criterion, e.g. a minimum distance condition is fulfilled. For example, a minimum point-to-point distance within the point cloud may be defined. Then, a point from the point cloud representing the first segmented tooth representation is added to the new point cloud if the point is at least the minimum point-to-point distance away from all other points in the point cloud representing the first segmented tooth representation. In this way, the new point cloud is created in which uniform distribution of points is ensured.

In some embodiments, the method for tooth pose estimation may comprise use of the trained neural network. Advantageously, the tooth poses are correctly estimated much faster with the aid of the trained neural network than with use of algorithmic methods. Additionally, the trained neural network is configured to handle a wider range of so-called edge cases where teeth may be extremely un-aligned. One type of neural networks particularly suitable for this use is the PointNet neural network or similar type of neural network which is able to make predictions on point clouds as inputs. Point clouds are represented as sets of 3-dimensional points where each point is a vector of its coordinates. The three main characteristics of point clouds are reflected in that they are unordered, that there exists interaction among the points and that point set should be invariant to transformations such as translation and rotation. These characteristics may define necessary requirements for the trained neural network for point cloud processing.

The output of the trained neural network may comprise a 3-dimensional rotation vector in axis-angle representation. The 3-dimensional rotation vector may describe how the first segmented tooth representation should be rotated in order to be placed in its correct local coordinate system and can be described by two quantities, namely a unit vector indicating a direction of an axis of rotation, and an angle describing the magnitude of the rotation about the axis of rotation.

The output of the trained neural network may further comprise a 3-dimensional translation vector comprising a translation amount for the first segmented tooth representation. The 3-dimensional translation vector may describe how the first segmented tooth representation should be translated in order to be placed in its correct local coordinate system.

According to an embodiment, a computer implemented method for training a neural network for tooth pose estimation is disclosed, the method comprising accessing an input training dataset comprising a training tooth representation and a ground truth tooth pose for the training tooth representation, wherein the ground truth tooth pose for the training tooth representation is a manually assigned tooth pose to the training tooth representation, inputting the at least one training tooth representation into the neural network for tooth pose estimation, obtaining an output of the neural network for tooth pose estimation comprising a predicted tooth pose for the training tooth representation, comparing the predicted tooth pose for the training tooth representation to the ground truth tooth pose for the training tooth representation to determine a loss and minimizing the loss. In an example the loss may be a function of a geodesic distance between the predicted tooth pose for the training tooth representation and the ground truth tooth pose for the training tooth representation.

The loss may, in one embodiment, be a sum of the geodesic distance between the predicted tooth pose for the training tooth representation and the ground truth tooth pose for the training tooth representation and a squared value of a Euclidian distance between an origin of the predicted tooth pose for the training tooth representation and an origin of the ground truth tooth pose for the training tooth representation. This sum may be then minimized using stochastic gradient descent algorithm.

The training tooth representation may be normalized to bring it in the origin of the global coordinate system, before its vertices are extracted and fed into the neural network for tooth pose estimation for the purpose of training.

The described training process may be performed for the rest of training tooth representations comprised in the input training dataset.

The training of the neural network is an iterative process and may be repeated until the neural network is no longer able to improve its output. This means that after a number of iterations, outputs of the neural network continuously equal the ground truth data. The number of iterations required for training of the neural network may be between 200000 to 400000 iterations, although this may be dependent on complexity of the neural network.

A dental scanning system may comprise a data processing device configured to carry out the method according to one or more embodiments of the disclosure.

A non-transitory computer-readable storage medium may be comprised in the dental scanning system. The non-transitory computer-readable medium can carry instructions which, when executed by a computer, cause the computer to carry out the method according to one or more embodiments of the disclosure.

A computer program product may be embodied in the non-transitory computer-readable storage medium. The computer program product may comprise instructions which, when executed by a computer, cause the computer to perform the method according to any of the embodiments presented herein.

### Brief description of the figures

Aspects of the disclosure may be best understood from the following detailed description taken in conjunction with the accompanying figures. The figures are schematic and simplified for clarity, and they just show details to improve the understanding of the claims, while other details are left out. The individual features of each aspect may each be combined with any or all features of other aspects. These and other aspects, features and/or technical effects will be apparent from and elucidated with a reference to the illustrations described hereinafter in which:
FIG. 1 illustrates a virtual 3D representation of lower jaw, with tooth poses displayed;
FIG. 2 is a flowchart illustrating a method according to an embodiment of the disclosure;
FIG. 3A shows the initial tooth pose for the first segmented tooth representation;
FIG. 3B shows the normalized tooth representation of the first segmented tooth representation;
FIG. 3C shows the initial tooth pose for the first segmented tooth representation;
FIG. 3D shows the correct tooth pose for the first segmented tooth representation;
FIG. 4 illustrates architecture of a trained neural network used to determine tooth pose;
FIG. 5 is a flowchart illustrating a method to train a neural network for tooth pose estimation;
FIG. 6 illustrates a dental scanning system.

### Detailed description

In the following description, reference is made to the accompanying figures, which show by way of illustration how the invention may be practiced.

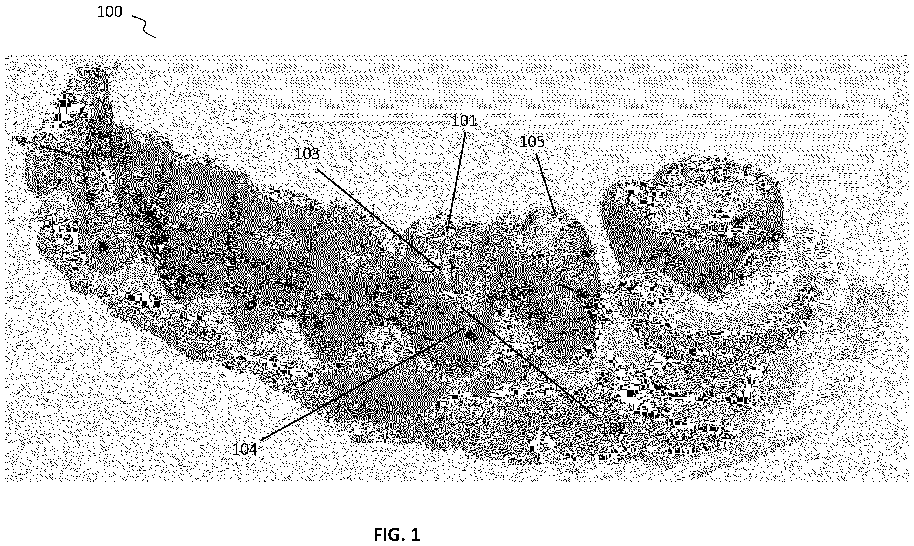

FIG.1 illustrates a virtual 3D representation 100 of a patient's dentition. In this case, the virtual 3D representation comprises a lower jaw with multiple teeth representations as shown, but in general, the virtual 3D representation may comprise an upper jaw or both the upper jaw and the lower jaw. The virtual 3D representation 100 represents the patient's dentition and may be constructed based on scan data collected in a scanning process in which, for example an intraoral scanner is used to scan patient's intraoral situation comprising teeth and gingiva. The captured scan data can be used to construct the virtual 3D representation 100 and render it on a display screen. The scan data or the virtual 3D representation 100 can be stored in and accessed from a memory device of a computer system.

The virtual 3D representation 100 may initially be in form of a 3D mesh representing geometrical information. The virtual 3D representation may also include texture information such as color. The geometrical information represents the lower jaw (as shown) but may also represent only the upper jaw or both the upper and lower jaw of the patient. Alternatively, the virtual 3D representation 100 may be in form of a point cloud or a voxel representation.

To identify individual teeth within the virtual 3D representation 100, a segmentation process of the virtual 3D representation 100 may be applied. By segmenting the virtual 3D representation 100 at least a first segmented tooth representation 101 and a second segmented tooth representation 105 may be obtained. The at least first and second segmented tooth representation 101, 105 may represent neighboring teeth in the same jaw of the patient's dentition. The segmentation process may be performed in different ways, for example based on identification of individual facet or group of facets belonging to a tooth representation. It thus allows for identifying objects such as individual teeth and/or surrounding gingiva in the virtual 3D representation 100 representing the patient's dentition which may comprise a plurality of teeth. Therefore, the output of the segmentation process may be individual tooth representations which are usually displayed in form of solid tooth objects, tooth meshes or tooth point clouds.

For each segmented tooth representation in FIG. 1 a tooth pose is displayed. The tooth pose may also be referred to as a local coordinate system specific for each segmented tooth representation. Each tooth pose is comprised of an origin in which a first axis, a second axis and a third axis intersect. A first axis 102 of a tooth pose for the first segmented tooth representation 101 lies along a mesial-distal direction of the first segmented tooth representation 101 and points in a direction of a second segmented tooth representation 105. A second axis 103 of the tooth pose for the first segmented tooth representation 101 points in a coronal direction of a tooth crown of the first segmented tooth representation 101 and is orthogonal to an occlusal or bite surface of the first segmented tooth representation 101. A third axis 104 of the tooth pose for the first segmented tooth representation 101 may be orthogonal to the first axis 102 and the second axis 103 and may face outwards along vestibular or facial direction. The tooth pose for the first segmented tooth representation 101 defined in this way may also be referred to as a correct tooth pose for the first segmented tooth representation 101. Other tooth poses for the rest of tooth representations are defined in an analogous way.

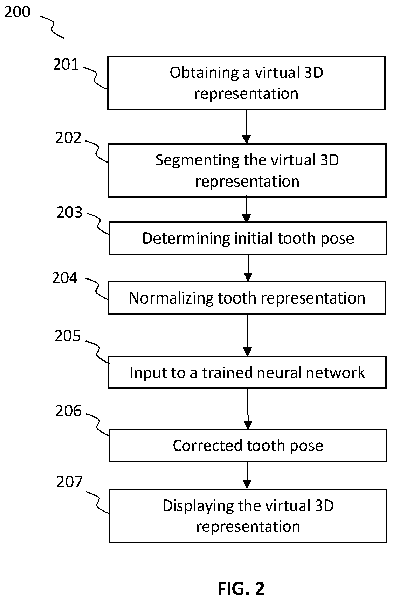

FIG.2 illustrates steps of the computer-implemented method 200 for tooth pose estimation according to an embodiment the disclosure. At 201, the virtual 3D representation 100 representing the patient's dentition may be obtained. The virtual 3D representation 100 can be obtained by scanning an intraoral situation of the patient, for example with an intraoral scanner, to obtain scan data. The scan data may comprise 2D images, color information, fluorescence and/or infrared information. Instead of the intraoral scanner, a desktop or a lab scanner can be used to scan a physical model of teeth. The scan data can then be directly transformed into the virtual 3D representation 100. The scan data can alternatively be stored, for example in a memory device of a computer system. Then, the virtual 3D representation 100 can be obtained by accessing the scan data from the memory device of the computer system. Usually, the virtual 3D representation 100 is displayed on a display screen in a form of a 3D mesh, for example a triangular mesh. Alternatively, the virtual 3D representation 100 can be displayed on the display screen in form of a point cloud, a volumetric representation, or any other suitable 3D representation form.

Segmenting the virtual 3D representation 100 may be done in step 202 to obtain at least the first segmented tooth representation 101 and the second segmented tooth representation 105. Segmenting the virtual 3D representation 100 can be done for determining facets of the virtual 3D representation belonging to individual teeth as per Universal Numbering System/Notation (UNN) and determining facets belonging to gingiva. Individual tooth representations can then be extracted and used, for example, in creating an orthodontic treatment. Once the individual tooth representations are obtained, their movement can be simulated by applying rotation and translation operations to their respective tooth poses. Segmentation of the virtual 3D representation 100 may be done in several ways. According to an example, segmenting may comprise use of surface curvatures to identify boundaries of tooth representations. A minimum principal curvature and a mean principal curvature can be used to measure surface property quantitatively. Then, a cutting plane to separate gingiva and teeth part may be produced, based on Principal Component Analysis algorithm (PCA). A curvature threshold value, for example a constant value, can be selected to distinguish tooth boundary regions from the rest of surface.

In another example, segmenting the virtual 3D representation 100 may comprise use of a harmonic field to identify tooth boundaries. On the virtual 3D representation 100, a harmonic field is a scalar attached to each mesh vertex satisfying the condition: ΔΦ=0, where Δ is Laplacian operator, subject to Dirichlet boundary constraint conditions. Above equation may be solved, for example using least squares method, to calculate the harmonic field. Segmented tooth representations 101, 105 can then be extracted by selecting optimal isolines connecting datapoints with same value, as tooth representation boundaries.

In yet another example, segmenting the virtual 3D representation 100 may comprise use of a segmentation machine learning model. In particular, the virtual 3D representation may be converted into a series of 2D virtual images taken from different perspectives. The segmentation machine learning model may be applied to the series of 2D virtual images. For each 2D virtual image, classification can be performed to distinguish between different teeth classes and gingiva. After classification of each 2D virtual image, back-projection onto the virtual 3D representation 100 may be performed. This method for segmenting the virtual 3D representation may be advantageous as the segmentation machine learning model utilizes the series of 2D virtual images, overall resulting in fast and accurate classification.

The first and the second segmented tooth representations 101, 105 represent neighboring teeth in the patient's dentition. Term "neighboring teeth" is to be understood as two teeth that are adjacently placed with respect to each other in the upper or lower jaw. Most commonly, the neighboring teeth will have consecutive numeration in the Universal Numbering Notation or System (UNN). In the UNN system numerals 1 - 32 are assigned to human teeth. In some cases, the neighboring teeth will not be marked with consecutive numbers in UNN notation, for example if a tooth in between the currently neighboring teeth has been removed previously. The first and second segmented tooth representation 101, 105 are representations of neighboring teeth in the patient's dentition. This can be advantageous in the tooth pose estimation method because it may be possible to determine, or predict, an initial tooth pose for the first segmented tooth representation 101 based on its spatial relation with the second segmented tooth representation 105 which represents a neighboring tooth.

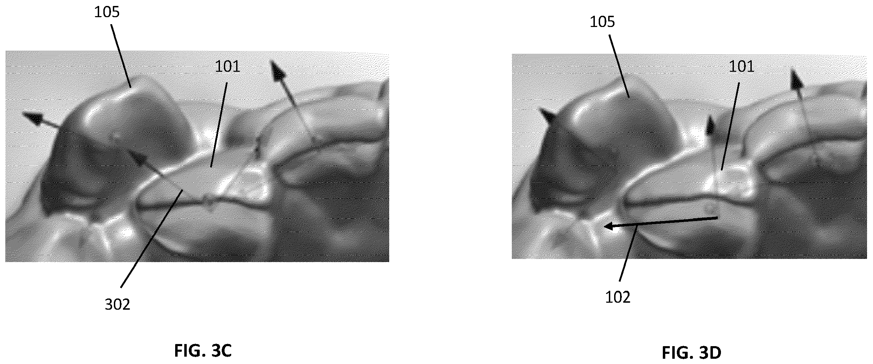

The method 200 further comprises, in step 203, determining the initial tooth pose 302 for the first segmented tooth representation 101 using a geometric parameter of the first segmented tooth representation 101 and a geometric parameter of the second segmented tooth representation 105. Determining the initial tooth pose 302 for the first segmented tooth representation 101 in this way leads to a fast estimation of the correct tooth pose for the first segmented tooth representation 101. For example, the geometric parameter of the first segmented tooth representation 101 and the geometric parameter of the second segmented tooth representation 105 can be used to set a first, a second or a third axis of the initial tooth pose for the first segmented tooth representation 101. The initial tooth pose 302 for the first segmented tooth representation 101 may differ to the tooth pose that is desired, i.e. the correct tooth pose for the first segmented tooth representation 101 (see FIG. 3C and FIG. 3D). However, it may be a good estimate of the correct tooth pose for the first segmented tooth representation 101 which means that the initial tooth pose 302 for the first segmented tooth representation 101 may closely match the correct tooth pose for the first segmented tooth representation 101. Accuracy of the initial tooth pose 302 for the first segmented tooth representation 101 depends on actual alignment of the first and the second tooth representation 101, 105. The more aligned the two neighboring teeth represented by the two segmented tooth representations are, the closer initial tooth pose is to the correct tooth pose.

The geometric parameter of the first segmented tooth representation 101 and the geometric parameter of the second segmented tooth representation 105 may be, in one embodiment, a centroid of the first segmented tooth representation 101 and a centroid of the second segmented tooth representation 105, respectively. A centroid of a segmented tooth representation is a point in 3D space that lies in a geometric center of the segmented tooth representation.

In an alternative embodiment, the geometric parameter of the first segmented tooth representation 101 and the geometric parameter of the second segmented tooth representation 105 may be a center of mass of the first segmented tooth representation 101 and a center of mass of the second segmented tooth representation 105, respectively. A center of mass of a segmented tooth representation is a point in 3D space that lies in a gravitational center of the segmented tooth representation. In case the segmented tooth representation represents a molar and/or a premolar tooth, cusps located on the tooth top may cause the center of mass to be shifted as compared to the centroid of that tooth representation, namely located closer towards the tooth top, or crown section of the tooth. An advantage of using the centroid over the center of mass may be reflected in that the centroid is more robust towards different tooth morphology.

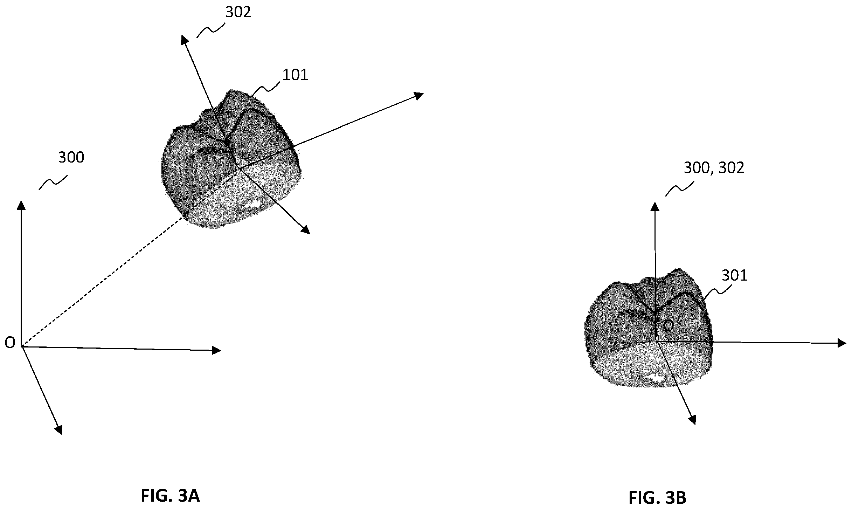

In a preferable additional step 204 a normalized tooth representation 301 (shown in FIG. 3B) of the first segmented tooth representation 101 may be obtained by transforming the first segmented tooth representation 101 using the initial tooth pose 302 for the first segmented tooth representation 101. Transforming may comprise rotating the first segmented tooth representation 101 according to the initial local coordinate system or the initial tooth pose 302, and translating the first segmented tooth representation 101 according to a negative value of coordinates of the origin of the initial tooth pose 302 (e.g. its centroid) of the first segmented tooth representation 101. The result is reflected in that the first segmented tooth representation 101 is placed around a global coordinate system with an origin in coordinates (0, 0, 0) (seen in FIG. 3B).

Further, FIG. 2 in 205 illustrates inputting the normalized tooth representation 301 (shown in FIG. 3B) for the first segmented tooth representation 101 into a trained neural network 400. The normalized tooth representation 301 of the first segmented tooth representation 101 may be in a form of a point cloud representation and the trained neural network 400 may be a deep learning network capable of handling directly 3-dimensional (3D) point clouds, therefore being compatible with the input format. If the normalized tooth representation 301 of the first segmented tooth representation 101 is in the form of a 3D mesh, it may then first be converted into the point cloud representation by eliminating the edges of the 3D mesh, thus leaving vertices to represent the normalized tooth representation 301 of the first segmented tooth representation 101.

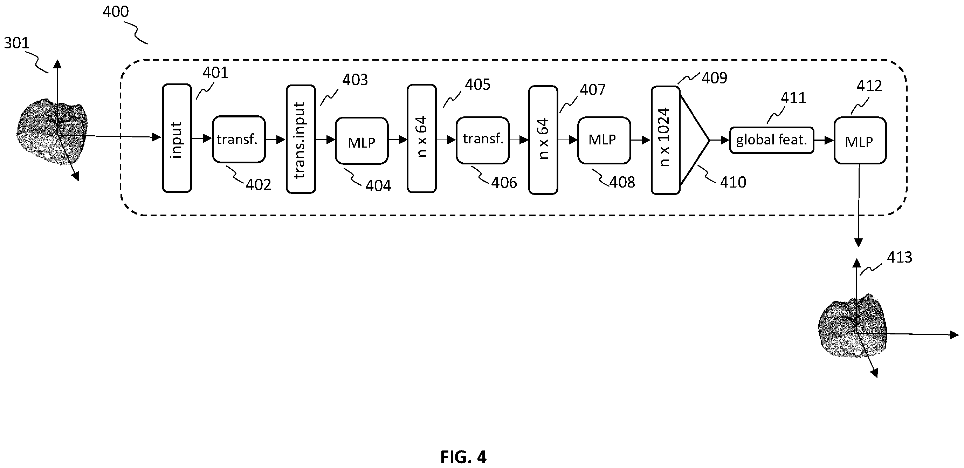

Method 200 in step 206 illustrates obtaining an output of the trained neural network 400 in form of the correct tooth pose 413 (shown in FIG. 4) for the first segmented tooth representation 101. In particular, the output of the trained neural network 400 provides translation and rotation parameters which, when applied to the first segmented tooth representation 101, provide the correct tooth pose 413 for the first segmented tooth representation 101.

The method 200 according to an embodiment may optionally comprise displaying step 207 where the virtual 3D representation 100 is displayed for example on the display screen, with the correct tooth pose 413 (shown in FIG. 4) for at least the first segmented tooth representation 101. Displaying may comprise, additionally or alternatively, displaying only the first segmented tooth representation 101 with the correct tooth pose 413. In one embodiment the method may comprise displaying the first segmented tooth representation 101 with the second axis of the correct tooth pose 413 for the first segmented tooth representation 101. The second axis of the correct tooth pose 413 for the first segmented tooth representation 101 may lie along the coronal direction of the first segmented tooth representation 101 and may be orthogonal to the occlusal surface or bite surface of the first segmented tooth representation 101.

Some patients may suffer from malocclusion where teeth of the upper jaw are in an incorrect relation with teeth of the lower jaw. For example, the tooth represented by the first segmented tooth representation 101 may be misaligned with its neighboring teeth and causing the malocclusion. This misalignment may be visualized by displaying the virtual 3D representation 100 comprising the first segmented tooth representation 101 and displaying the correct tooth pose 413 for the first segmented tooth representation 101. It may then be possible to automatically quantify a difference between the correct tooth pose 413 for the first segmented tooth representation 101 and an ideal tooth pose for the first segmented tooth representation 101, where the ideal tooth pose represents the tooth if it were moved in a position to correct the malocclusion. This difference may be reflected in translation and rotation parameters required to bring the correct tooth pose 413 for the first segmented tooth representation 101 to overlap with the ideal tooth pose for the first segmented tooth representation 101. An ideal tooth pose for a segmented tooth representation can be defined as a tooth pose for the segmented tooth representation, where the segmented tooth representation represents a tooth that is substantially aligned with an ideal dental arch line, for example after applying an orthodontic treatment to move the tooth into alignment position with the ideal dental arch line.

For correcting the malocclusion an orthodontic treatment may be required. The outcome of the orthodontic treatment may be simulated by applying rotation and translation parameters to the first segmented tooth representation 101, wherein rotation and translation parameters are determined as the difference between the correct tooth pose 413 for the first segmented tooth representation 101 and the ideal tooth pose for the first segmented tooth representation 101. This simulation of the orthodontic treatment outcome is beneficial as it may provide a dental professional with information on final tooth arrangement after applying the orthodontic treatment. For example, in some cases applying the rotation and translation parameters to the correct tooth pose 413 for the first segmented tooth representation 101 results in aligned placement of the first segmented tooth representation 101 in the virtual 3D representation without collision with neighboring tooth representations. In other cases, applying the rotation and translation parameters on the correct tooth pose 413 for the first segmented tooth representation 101 results in aligned placement of the first segmented tooth representation 101 in the virtual 3D representation 100 where collision with neighboring tooth representations may occur. It may then be necessary to remove a tooth represented by one of the neighboring tooth representations in order to achieve a satisfactory placement of the first segmented tooth representation 101 in the virtual 3D representation 100. It may also be possible to determine a point on the tooth represented by the first segmented tooth representation 101 at which a force should be applied to correct the malocclusion, as well as a direction of the force.

FIG. 3A shows the initial tooth pose 302 for the first segmented tooth representation 101 and the global coordinate system 300 having the origin in a point O with coordinates (0, 0, 0) . The normalized tooth representation 301 for the first segmented tooth representation 101 may be obtained by aligning the initial tooth pose 302 for the first segmented tooth representation 101 with the global coordinate system 300. FIG. 3B shows the normalized tooth representation 301 of the first segmented tooth representation 101. The origin of the initial tooth pose 302 for the first segmented tooth representation 101 coincides with the point O with coordinates (0, 0, 0) after normalization.

FIG. 3C and FIG. 3D illustrate a section of the virtual 3D representation 100 where teeth represented by the first segmented tooth representation 101 and the second segmented tooth representation 105 are not mutually aligned. FIG. 3C shows the initial tooth pose 302 for the first segmented tooth representation 101 determined according to the discussed method. It may be seen that the initial tooth pose 302 differs to the correct tooth pose for the first segmented tooth representation 101 shown in FIG. 3D. More precisely, the first axis of the initial tooth pose 302 for the first segmented tooth representation 101 (FIG. 3C) has a different direction to the first axis 102 of the correct tooth pose for the first segmented tooth representation 101 shown in FIG. 3D. However, the initial tooth pose 302 may be a good estimate of the correct tooth pose for the first segmented tooth representation 101. Accuracy of the initial tooth pose 302 for the first segmented tooth representation 101 depends on actual alignment of the first and the second tooth representation 101, 105.

FIG. 4 shows an example of a neural network architecture suitable for use in the method for tooth pose estimation according to an embodiment of the disclosure. The trained neural network 400 may be a PointNet neural network capable of processing the normalized tooth representation 301 of the first segmented tooth representation 101 in form of a point cloud. Model presented in FIG. 4 is capable of taking an unordered point set as input. A generic model of this network architecture was developed by Stanford University ("PointNet: Deep Learning on Point Sets for 3D Classification and Segmentation", Charles R. Qi, Hao Su, Kaichun Mo, Leonidas J. Guibas). Additional to PointNet neural network, the trained neural network 400 may be a PointNet++ or a PointNet-like neural network.

The normalized tooth representation 301 of the first segmented tooth representation 101 serves as an input 401 to the trained neural network 400. The input 401 may be of a format n x 3, where n is a number of 3D points representing the normalized tooth representation 301 of the first segmented tooth representation 101 and dimension 3 stands for three coordinates of each point representing the normalized tooth representation 301. The input 401 is processed by an input transformation block 402 which may be a 3 x 3 rotation transformation. The input transformation block 402 has the effect of achieving invariance under transformation. Block 403 may be a transformed input with the format n x 3. Alternatively, the input 401 may be of a format n x 6, where n is the number of 3D points representing the normalized tooth representation 301 of the first segmented tooth representation 101 and dimension 6 stands for three coordinates of each point representing the normalized tooth representation 101 and three coordinates representing a normal of each point.

Block 404 represents a first multi-layer perceptron with shared weights, which may process independently all 3D points for feature extraction. Its function is to achieve invariance under permutation of 3D points order. Architecture of the first multi-layer perceptron 404 (MLP) may comprise an input layer of 3 dimensions, a hidden layer of 64 neurons while an output layer may comprise 64 features. Block 405 may have dimension of n x 64.

Feature transformation 406 block may comprise a transformation matrix of dimensions 64 x 64, which may be a regularization matrix, for example of L2 type. Block 407 may be dimensioned as n x 64. Block 408 represents a second multi-layer perceptron with shared weights. Architecture of the second multi-layer perceptron 408 (MLP) may comprise an input layer of 64 features, two hidden layers of 64 neurons and 128 neurons, while an output layer of the second multi-layer perceptron 408 may comprise 1024 features. Block 409 may have dimension of n x 1024. In max pooling block 410, feature vectors of 3D points are aggregated to create a 1024-dimensional global feature representation 411 of the normalized tooth representation 301. Block 412 represents a third multi-layer perceptron. Architecture of the third multi-layer perceptron 412 (MLP) may comprise an input layer of 1024 features, two hidden layers of 512 neurons and 256 neurons, while an output layer of the third multi-layer perceptron 412, also referred to as the output of the trained neural network 400, may comprise classification scores.

The output of the trained neural network 400 may comprise a 3-dimensional rotation vector in axis-angle representation. The 3-dimensional rotation vector may describe how the first segmented tooth representation 101 should be rotated in order to be placed in its correct tooth pose 413. It can be described by two quantities, namely a unit vector indicating a direction of an axis of rotation, and an angle having a value between 0 and 2n radians, describing the magnitude of the rotation about the axis of rotation.

The output of the trained neural network 400 may further comprise a 3-dimensional translation vector comprising a translation amount for the first segmented tooth representation 101. The 3-dimensional translation vector may describe how the first segmented tooth representation 101 should be translated in order to be placed in its correct tooth pose 413.

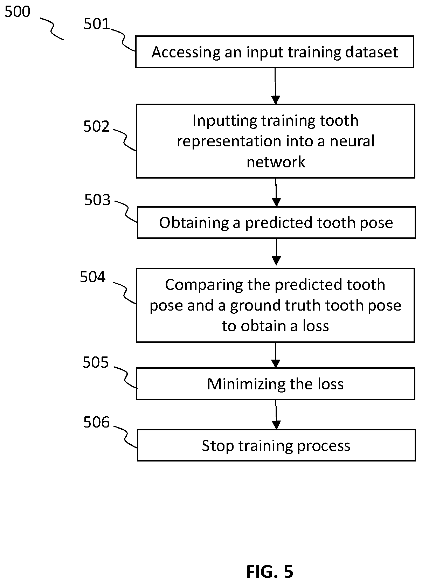

The trained neural network 400 may be obtained in a computer implemented method 500 of training a neural network for tooth pose estimation as shown in FIG. 5. An input training dataset comprising a training tooth representation and a ground truth tooth pose for the training tooth representation may be used in the training process. The input training dataset is accessed in 501. The ground truth tooth pose for the training tooth representation may be a manually assigned tooth pose to the training tooth representation. The input training dataset may additionally comprise several hundred or several thousands of training tooth representations or segmented tooth representations.

The training tooth representation may preferably be normalized to place it in the origin of the global coordinate system. Afterwards, the vertices of the training tooth representation may be extracted and fed into the neural network for tooth pose estimation in 502 for the purpose of training. Output of the neural network for tooth pose estimation, in 503, may comprise a predicted tooth pose for the training tooth representation. The predicted tooth pose for the training tooth representation may then be compared, in 504, to the ground truth tooth pose for the training tooth representation. A difference between the predicted tooth pose for the training tooth representation and the ground truth tooth pose for the training tooth representation may then be minimized in 505, for example by using stochastic gradient descent algorithm (SGD). This difference may also be referred to as a loss, or a loss function or an error. In particular, the loss may be a function of a geodesic distance between the predicted tooth pose for the training tooth representation and the ground truth tooth pose for the training tooth representation and a Euclidian distance between an origin of the predicted tooth pose for the training tooth representation and an origin of the ground truth tooth pose for the training tooth representation. The training of the neural network for tooth pose estimation is stopped, in 506, when the loss reaches a stopping criterion. For example, the stopping criterion may be a threshold value for the loss.

The training process may optionally comprise an augmentation step where a small amount of rotation or jitter is added to the training tooth representation. Effect of the augmentation step is that the neural network for tooth pose estimation "sees" a slightly changed input, resulting in a more robust behavior of the neural network for tooth pose estimation which is able to generalize better to new unseen data.

The geodesic distance between the predicted tooth pose for the training tooth representation and the ground truth tooth pose for the training tooth representation represents an amount of radians the predicted tooth pose for the training tooth representation needs to be rotated by, in order to equal the ground truth tooth pose for the training tooth representation. The Euclidian distance between an origin of the predicted tooth pose for the training tooth representation and the origin of the ground truth tooth pose for the training tooth representation represents a distance the predicted tooth pose for the training tooth representation needs to be translated by, so that origin of the predicted tooth pose for the training tooth representation and the origin of the ground truth tooth pose for the training tooth representation overlap.

The loss may, in one embodiment, be a sum of the geodesic distance between the predicted tooth pose for the training tooth representation and the ground truth tooth pose for the training tooth representation and a squared value of the Euclidian distance between the origin of the predicted tooth pose for the training tooth representation and the origin of the ground truth tooth pose for the training tooth representation. This sum may be then minimized using stochastic gradient descent algorithm.

The training of the neural network for tooth pose estimation is an iterative process and may be repeated until the neural network for tooth pose estimation is no longer able to improve its output. This means that after a number of iterations, outputs of the neural network for tooth pose estimation continuously equal the ground truth data. The number of iterations required for training of the neural network for tooth pose estimation may be between 200000 to 400000 iterations, preferably 300000 iterations.

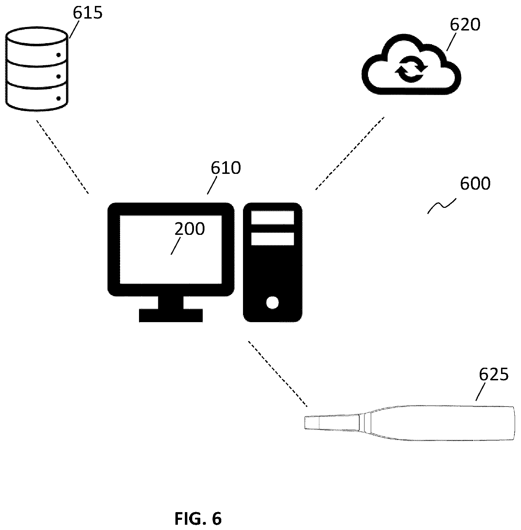

FIG. 6 illustrates a dental scanning system 600 which may comprise a computer 610 capable of carrying out the method 200 or the method 500. The computer may comprise a wired or a wireless interface to a server 615, a cloud server 620 and an intraoral scanner 625. The intraoral scanner 625 may be capable of recording the scan data comprising geometrical and texture data of patient's dentition. The intraoral scanner 625 may be equipped with various modules such as a fluorescence module or an infrared module and thereby capable of capturing information relevant for diagnosing dental conditions such as caries, tooth cracks, gingivitis or plaque.

The dental scanning system 600 may comprise a data processing device configured to carry out the method according to one or more embodiments of the disclosure. The data processing device may be a part of the computer 610, the server 615 or the cloud server 620.

A non-transitory computer-readable storage medium may be comprised in the dental scanning system 600. The non-transitory computer-readable medium can carry instructions which, when executed by a computer, cause the computer to carry out the method according to one or more embodiments of the disclosure.

The non-transitory computer-readable medium may comprise instructions which, when executed by a computer, cause the computer to obtain the virtual 3D representation 100 representing the patient's dentition, to segment the virtual 3D representation 100 to obtain at least the first segmented tooth representation 101 and the second segmented tooth representation 105, wherein the at least first and second segmented tooth representation 101, 105 represent neighboring teeth in the patient's dentition, to determine the initial tooth pose 302 for the first segmented tooth representation 101 using the geometric parameter of the first segmented tooth representation 101 and the geometric parameter of the second segmented tooth representation 105, to obtain the normalized tooth representation 301 of the first segmented tooth representation 101 by transforming the first segmented tooth representation 101 using the initial tooth pose 302 for the first segmented tooth representation 101, to input the normalized tooth representation 301 of the first segmented tooth representation 101 into the trained neural network 400 and to produce an output from the trained neural network 400, wherein the output comprises a correct tooth pose 413 for the first segmented tooth representation 101.

A computer program product may be embodied in the non-transitory computer-readable storage medium. The computer program product may comprise instructions which, when executed by a computer, cause the computer to perform the method according to any of the embodiments presented herein.

The computer program product may comprise instructions which, when executed by a computer, cause the computer to obtain the virtual 3D representation 100 representing the patient's dentition, segment the virtual 3D representation 100 to obtain at least the first segmented tooth representation 101 and the second segmented tooth representation 105, wherein the at least first and second segmented tooth representation 101, 105 represent neighboring teeth in the patient's dentition, to determine the initial tooth pose 302 for the first segmented tooth representation 101 using the geometric parameter of the first segmented tooth representation 101 and the geometric parameter of the second segmented tooth representation 105, to obtain the normalized tooth representation 301 of the first segmented tooth representation 101 by transforming the first segmented tooth representation 101 using the initial tooth pose 302 for the first segmented tooth representation 101, to input the normalized tooth representation 301 of the first segmented tooth representation 101 into the trained neural network 400 and produce an output from the trained neural network 400, wherein the output comprises a correct tooth pose 413 for the first segmented tooth representation 101.

Although some embodiments have been described and shown in detail, the disclosure is not restricted to such details, but may also be embodied in other ways within the scope of the subject-matter defined in the following claims. In particular, it is to be understood that other embodiments may be utilized, and structural and functional modifications may be made without departing from the scope of the present invention.

It should be appreciated that reference throughout this specification to "one embodiment" or "an embodiment" or "an aspect" or features included as "may" means that a particular feature, structure or characteristic described in connection with the embodiments is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

## Claims

1. A computer-implemented method for tooth pose estimation, the method comprising:
- obtaining a virtual 3D representation representing a patient's dentition;
- segmenting the virtual 3D representation to obtain at least a first segmented tooth representation and a second segmented tooth representation, wherein the at least first and second segmented tooth representation represent neighboring teeth in the patient's dentition;
- determining an initial tooth pose for the first segmented tooth representation using a geometric parameter of the first segmented tooth representation and a geometric parameter of the second segmented tooth representation;
- obtaining a normalized tooth representation of the first segmented tooth representation by transforming the first segmented tooth representation using the initial tooth pose for the first segmented tooth representation;
- inputting the normalized tooth representation of the first segmented tooth representation into a trained neural network;
- producing an output from the trained neural network, wherein the output comprises a correct tooth pose for the first segmented tooth representation.

2. The method according to claim 1, wherein the geometric parameter of the first segmented tooth representation is a centroid of the first segmented tooth representation and the geometric parameter of the second segmented tooth representation is a centroid of the second segmented tooth representation.

3. The method according to any previous claim, wherein determining the initial tooth pose for the first segmented tooth representation using the geometric parameter of the first segmented tooth representation and the geometric parameter of the second segmented tooth representation comprises determining a first, a second and a third axis of the initial tooth pose for the first segmented tooth representation.

4. The method according to previous claim 3, wherein the first axis of the initial tooth pose for the first segmented tooth representation is calculated as a difference between the centroid of the first segmented tooth representation and the centroid of the second segmented tooth representation.

5. Method according to any of the claims 3 or 4, wherein the second axis of the initial tooth pose for the first segmented tooth representation is orthogonal to an occlusal surface of the first segmented tooth representation.

6. Method according to any of the claims 3 - 5, wherein the third axis of the initial tooth pose for the first segmented tooth representation is obtained as a cross product between the first axis of the initial tooth pose for the first segmented tooth representation and the second axis of the initial tooth pose for the first segmented tooth representation.

7. Method according to any previous claim, further comprising adapting the first segmented tooth representation by reducing a number of vertices representing the first segmented tooth representation.

8. Method according to any previous claim wherein the trained neural network is a PointNet neural network.

9. Method according to any previous claim wherein the output of the trained neural network comprises a 3-dimensional rotation vector in axis-angle representation.

10. Method according to any previous claim, wherein the output of the trained neural network comprises a 3-dimensional translation vector comprising a translation amount for the first segmented tooth representation.

11. Method according to any previous claim, further comprising converting the first segmented tooth representation in a point cloud representation.

12. Computer implemented method of training a neural network for tooth pose estimation, comprising:
- accessing an input training dataset comprising a training tooth representation and a ground truth tooth pose for the training tooth representation, wherein the ground truth tooth pose for the training tooth representation is a manually-assigned tooth pose to the training tooth representation;
- inputting the at least one training tooth representation into the neural network for tooth pose estimation;
- obtaining an output of the neural network for tooth pose estimation comprising a predicted tooth pose for the training tooth representation;
- comparing the predicted tooth pose for the training tooth representation to the ground truth tooth pose for the training tooth representation to determine a loss;
- minimizing the loss; and
- stopping training the neural network for tooth pose estimation when the loss reaches a stopping criterion.

13. A data processing apparatus comprising means for carrying out the method of any one of claims 1 - 11 or claim 12.

14. A computer program product comprising instructions which, when the program is executed by a computer, causes the computer to carry out the method of any one of claims 1-11 or claim 12.

15. A non-transitory computer-readable medium comprising instructions which, when executed by a computer, cause the computer to carry out the method of any of claims 1-11 or claim 12.
